# EUROPÄISCHE PATENTSCHRIFT

(11) **EP 1 541 397 B1**
(45) Veröffentlichungstag und Bekanntmachung des Hinweises auf die Patenterteilung: **14.05.2008**
(21) Anmeldenummer: 04028503.3
(22) Anmeldetag: 02.12.2004
(51) Int. Cl.: B60J 1/00, C09J 5/00, C08G 18/10, C08G 77/18

(54) **Verfahren zur Herstellung eines lagerfähigen modularen Bauteils für die Klebemontage**
Method of producing a storage stable modular construction element for mounting via adhesion
Procédé de fabrication d'un elément de construction modulaire stable au stockage pour montage par collage

(30) Priorität: 09.12.2003 DE 10357701
(43) Veröffentlichungstag der Anmeldung: 15.06.2005
(73) Patentinhaber: Henkel Kommanditgesellschaft auf Aktien, 40589 Düsseldorf (DE)
(72) Erfinder: Dernst-Mentges, Christa, 69181 Leimen (DE); Stege, Michael, 38446 Wolfsburg (DE); Tot, Oto, 69251 Gaiberg (DE)

(56) Entgegenhaltungen:
- EP-A- 0 574 315

## Beschreibung

Die vorliegende Erfindung betrifft ein Verfahren zur Herstellung eines lagerfähigen modularen Bauteils, dass für eine Montage durch Kleben mit einem anderen Bauteil unter Verwendung eines Montageklebers vorbereitet ist.

In der industriellen Fertigung von komplexeren Einheiten wird immer stärker dazu übergangen, diese in einzelnen Modulen separat zu fertigen und anschließend diese Module zum Endprodukt zu fügen. Besonders ausgeprägt ist dieser Trend in der Fahrzeugindustrie, insbesondere in der Automobilindustrie. Da hier im zunehmenden Masse Module aus verschiedenen Werkstoffen miteinander gefügt werden müssen, setzt sich das Kleben und insbesondere das strukturelle Kleben gegenüber traditionellen mechanischen Befestigungsverfahren wie Schweißen, Schrauben oder Bördeln immer mehr durch.

Beispiele für derartige modulare Bauweise sind die fertig für die Klebung vorbereiteten feststehenden Scheiben eines Kraftfahrzeuges, Batteriekästen, Abdeckplatten oder Dachmodule, die in der Endmontage eines Fahrzeuges unter Zuhilfenahme eines Montageklebstoffes mit der Fahrzeugkarosserie klebend verbunden werden. Zwischen der Fertigung derartiger Module oder Anbauteile und deren Montage an die Karosserie können dabei mehrere Tage, Wochen, oder Monate, im Reparaturfall, sogar Jahre liegen. Um eine sichere Klebung zu gewährleisten, muss dabei die zu verklebende Oberfläche über einen langen Zeitraum "klebefreundlich" bleiben, das heißt der Klebstoff muss eine kraftschlüssige Bindung mit dieser Oberfläche eingehen können.

EP 1060930 A1 beschreibt ein Verfahren zum Herstellen und Verkleben einer mit Kunststoff ummantelten Scheibe. Dabei ist der Randbereich der Scheibe mit einem thermoplastischen Kunststoff ummantelt. Es wird vorgeschlagen, vorzugsweise nach Auftragen eines Klebers oder Primers auf den Randbereich der Scheibe diese mit einer ersten Kunststoffkompörtente zu umspritzen, danach soll auf diese erste Kunststoffkomponente ein Primer aufgetragen werden und auf diesen Primer eine zweite Kunststoffkomponente aufgebracht werden oder die zweite Kunststoffkomponente soll formschlüssig mit der ersten Kunststoffkomponente verbunden sein und die zweite Kunststoffkomponente soll durch Auftrag eines "Langzeit-Primers" zum späteren Verkleben mit einem Kunststoffkleber vorbereitet sein. Dabei soll die derart vorbereitete ummantelte Scheibe sich noch nach Wochen, beispielsweise nach zwei bis drei Monaten durch Verkleben weiterverarbeiten lassen. Weitere Informationen über den sogenannten Langzeit-Primer werden in dieser Schrift nicht gemacht.

WO 94/18255 beschreibt ein wärmeaktivierbares modulares Bauteil, insbesondere ein lagerfähiges Glasmodul, das für eine Montage durch Verkleben mit einem anderen Bauteil ohne Verwendung eines zusätzlichen Montageklebers vorbereitet ist. Dazu wird vorgeschlagen, entlang des Randes des modularen Bauteils einen profilierten Strang aus einem latent reaktiven Klebstoff aufzubringen. Dieser Klebstoff soll ein oder mehrere Polyurethane mit blockierten Isocyanat-Gruppen oder ein oder mehrere Polyurethan-Vorprodukte aus Polyolen und/oder Polyaminen und aus verkapselten Diisocyanaten oder ein oder mehrere Polyurethane mit radikalisch polymerisierbaren Gruppen aufweisen. Die Reaktion des Klebstoffes erfolgt durch Erwärmen des Bauteiles oder zumindest des mit Klebstoff beschichteten Bereiches auf Temperaturen von 70 bis 180°C. Dadurch bleibt der Klebstoff für eine für die Montage ausreichende Zeit klebrig und nicht fließend aber plastisch verformbar. Es wird vorgeschlagen, diesen latent reaktiven Klebstoff durch Zufuhr von elektrischer, elektromagnetischer oder magnetischer Energie oder durch Infrarot-Bestrahlung zu aktivieren. Nachteilig bei einer derartigen Vorgehensweise ist der apparative Aufwand, der notwendig ist, um den Klebstoff in seine reaktive Form zu überführen.

US-A-5723196 beschreibt eine Kunststoff ummantelte Glasscheibe für ein Automobil. Diese Ummantelung soll als rahmenartiges Profil ausgestaltet sein, das mit einem gegen den Befestigungsflansch gerichteten U-förmigen Abschnitt versehen ist. Dabei soll das Profil zwei Stege aufweisen, die zur Innenseite des U mit Verankerungsvorsprüngen für die Aufnahme eines Montageklebers versehen sind. Der Kleber härtet an Ort und Stelle innerhalb des U-förmigen Kanals beim Einsetzen der Glasscheibe und während der Haftung des Klebers auf dem Befestigungsflansch aus. In einer Ausführungsform soll die Verbindung zwischen Profil und ausgehärtetem Kleber allein mechanisch durch Formschluss erfolgen. In einer weiteren Ausführungsform soll die innere Oberfläche des U-förmigen Abschnittes des rahmenartigen Profils, die mit dem Montagekleber in Berührung kommt, wenigstens teilweise mit einer Feuchtigkeit und/oder Hydroxylionen enthaltenden Schicht versehen sein. Diese Vorgehensweise erfordert komplexe Spritzgussformen, die den Rand des modularen Bauteils umfassen, um derartige Kunststoffprofile im Randbereich der Scheiben anzubringen.

Eine weitere bekannte Vorgehensweise ist die Beschichtung der zu verklebenden Oberflächenbereiche der Module mit geeigneten reaktiven Primern. Geeignete reaktive Primer sind Lösungen von Isocyanat-Gruppen-haltigen und/oder Alkoxysilangruppen-haltigen Bindemitteln in flüchtigen, aprotischen Lösungsmitteln. Nach dem Abdampfen des Lösungsmittels reagieren derartige Primer mit der Feuchtigkeit der umgebenden Luft unter Vernetzung und bilden so eine lackähnliche Schicht auf der zu verklebenden Oberfläche, gleichzeitig sind sie so ausgerüstet, dass sie eine innige chemische Bindung der Oberfläche des Moduls eingehen und andererseits eine haftfreundliche Oberfläche auf der dem Montagekleber zugewandten Seite aufweisen. Gute derartige Primer des Standes der Technik weisen auf der dem Montagekleber zugewandten Seite eine für eine gute Verklebung ausreichende Aktivität von einigen Wochen bis zu ein bis drei Monaten auf. Bei längerer Lagerung sinkt die "Haftfreundlichkeit", der dem Montagekleber zugewandten Oberfläche. Es wird vermutet, dass im Laufe der längeren Lagerzeit sämtliche reaktiven Gruppen des Primers abreagiert haben, so dass eine verlässliche Haftgrundlage für den aufzubringenden Montagekleber nicht mehr vorhanden ist. Bisher behilft man sich, je nach Lagerdauer, mit zwei unterschiedlichen Vorgehensweisen. Bei kürzerer Lagerdauer des mit Primer versehenden Moduls wird die Primer-Oberfläche mit einem sogenannten Aktivator behandelt. Dies ist in der Regel eine sehr stark verdünnte Lösung von Alkoxysilanen oder von Organotitanaten oder Organozirkonaten. Bei längerer Zwischenlagerung des Moduls von einigen Monaten ist ein neuer Auftrag eines Primers auf die alte Primerschicht notwendig.

Bei der Direktverglasung wird bis heute nach drei Arbeitsweisen zum Aufbringen des Glasprimers auf die Scheiben gearbeitet:
1. Die Glasscheiben werden direkt an der Linie gereinigt und mit einem Primerauftrag versehen, in diesem Fall beträgt die offene Zeit, d.h. die Zeit innerhalb derer das Bauteil nach Primerauftrag verklebt werden muss, maximal 4 Tage,
2. Die Reinigung und der Primerauftrag erfolgt beim Glashersteller mit speziell hierfür entwickelten Primern, in diesem Fall beträgt die offene Zeit bis zu drei Monate,
3. Im Reparaturfall in der Werkstatt erfolgt das Reinigen und Primern vor Ort mit einer maximal offenen Zeit von 24 Stunden.

Wird nach dem zweiten Verfahren gearbeitet, so muss bei Scheiben, die länger als drei Monate zwischengelagert wurden, die Primerschicht entweder mit einem speziellen Aktivator reaktiviert werden oder es muss mit einem Glasprimer nachgeprimert werden. Nach dieser Reaktivierung sind die Scheiben analog zu Verfahren 1 zu behandeln. Insbesondere bei Scheiben, die mit geringen Stückzahlen produziert werden, wird bei der Vorgehensweise nach Verfahren 2 die Haltbarkeit oft überschritten und die notwendige Reaktivierung wird häufig nicht durchgeführt. Dies führt dann sehr oft zu Qualitätsproblemen der Klebung. Wegen der Kontaminationsgefahr der geprimerten Schicht, dürfen Scheiben, die für die Reparaturverglasung vorgesehen sind, nicht vorgeprimert werden, d.h. es müssen für baugleiche Scheiben zwei verschiedene Sorten (geprimerte und ungeprimerte) Scheiben bevorratet werden.

Es besteht also ein Bedarf für modulare Bauteile, die für eine Montage mit Hilfe von Montageklebern vorbereitet sind, die über einen langen Zeitraum lager- und transportfähig sind, ohne dass es der erneuten Applikation von lösungsmittelhaltigen Primern oder Aktivatoren bedarf.

In der EP-A-0 574 315 wird ein Verfahren zur Behandlung einer Verglasung beschrieben, welches diese befähigt, dass sie selbst nach mehrmonatiger Lagerung mit Hilfe eines Klebstoffes in die Fensteröffnung einer Kraftfahrzeugkarosserie eingeklebt werden kann. Hierbei wird auf einen Teil der Oberfläche der Verglasung im ersten Verfahrensschritt ein Silan aufgetragen. Zusammen mit dem Silan oder nach Auftrag desselben werden die Ausgangskomponenten zur Bildung eines Polyurethans mit freien OH-Gruppen aufgebracht, wobei die in Äquivalenten ausgedrückte Polyolkomponente in Bezug auf die Isocyanatkomponente im Überschuss vorliegt. Nach Polymerisation dieses Haftvermittlers verbleibt eine Schicht mit freien OH-Gruppen, die auch nach längerer Lagerzeit die Haftung eines Klebstoffes ermöglicht.

Demgegenüber betrifft die vorliegende Erfindung ein Verfahren zur Herstellung eines lagerfähigen modularen Bauteils, welches für eine Montage durch Kleben mit einem anderem Bauteil unter Verwendung eines Montageklebers vorbereitet ist, wobei die zu verklebenden Oberflächenbereiche, die mit dem Montagekleber in Berührung kommen, reaktive Gruppen aufweisen, die mit dem Montagekleber eine chemische Reaktion eingehen, gekennzeichnet durch die folgenden wesentlichen Verfahrensschritte:
a) Auftragen einer Bindemittelzusammensetzung enthaltend reaktive Isocyanatgruppen als feuchtigkeitsreaktiven Primer auf die zu verklebenden Oberflächenbereiche des Bauteils,
b) Ablüften der aufgetragenen Primerschicht,
c) Auftragen einer H-aktiven Substanz auf der Primerschicht,
d) Ablüften und Aushärten der reaktiven Primerschicht.

Erfindungsgemäß werden die zu verklebenden Oberflächenbereiche mit einem reaktiven Primer beschichtet. Unter einem "reaktiven Primer" im Sinne dieser Erfindung wird eine lösungsmittelhaltige, lackähnliche Bindemittelzusammensetzung verstanden, die so beschaffen ist, dass auch nach vollständigem Abbinden des Bindemittelsystems reaktive Gruppen verbleiben, die mit dem Montagekleber eine chemische Reaktion eingehen können. Es verbleiben im Oberflächenbereich des reaktiven Primers nach dessen Abbinden bzw. Vernetzen H-aktive Gruppen (aktiven Wasserstoff enthaltende Gruppen nach Zerewitinoff). Geeignete H-aktive Gruppen sind Hydroxylgruppen, Aminogruppen, Mercaptogruppen, ggf. Carboxylgruppen oder deren Kombination.

Die Ablüftezeit nach dem Auftragen des Primers gemäß Schritt b) kann in weiten Grenzen variieren, das heißt sie liegt zwischen 5 Sekunden und 8 Stunden, im Hinblick auf effiziente und rationelle Fertigung sind Ablüftezeiten zwischen 30 Sekunden und 30 Minuten nötig, besonders bevorzugt sind Ablüftezeiten zwischen 30 Sekunden und 5 Minuten.

Die Ablüftezeit nach Auftrag der H-aktiven Substanz auf die Primerschicht (Schritt d)) ist sehr unkritisch, sie kann zwischen 2 Minuten und 60 Minuten betragen, vorzugsweise liegt sie zwischen 5 Minuten und 20 Minuten. Bei geeigneten Verpackungen ist es jedoch auch möglich, dass derart für die Verklebung vorbereitete Modul direkt in die Transport- oder Lagerverpackung oder in geeignete Lagerregale einzubringen.

Als H-aktive Substanz werden erfindungsgemäß verdünnte Lösungen von Aminen, Aminoalkoholen, Polyolen, Polymercaptanen, Polycarbonsäuren, Hydroxycarbonsäuren, Aminocarbonsäuren, Mercaptocarbonsäuren oder deren Mischungen verwendet. Konkrete Beispiele für Hydroxygruppen-funktionelle Verbindungen sind die Diole wie Propandiol, Butandiol, für Triole seien beispielhaft Glycerin oder Trimethylolpropan genannt, es können jedoch auch hydroxylgruppenhaltige Polyether wie Polyethylenglykole, Polypropylenglykole oder deren Copolymeren sowie hydroxylgruppenhaltige Polyester, hydroxylgruppenhaltige Polyacrylate oder Cellulosester verwendet werden. Beispiele für aminofunktionelle Verbindungen sind Diamine wie Hexamethylendiamin, 2,2,4-Trimethylhexamethylendiamin oder Triamine wie Diethylentriamin sowie höher- funktionelle Polyamine, Polyaminoamide, Polyethylenimine oder tertiäre Amine. Beispiele für H-aktive Substanzen mit Amino-und Hydroxylgruppen sind Diethanolamin, Trishydroxymethylaminomethan sowie ähnliche Aminoalkohole.

Als Lösungsmittel für die H-aktiven Substanzen werden leichtflüchtige, organische Lösungsmittel bevorzugt, beispielsweise Ethylacetat, Isopropanol oder Ketone.

Die H-aktiven Substanzen werden vorzugsweise in 0,1 bis 15 Gew.-%, besonders bevorzugt zwischen 1 und 5 Gew.-% in den vorgenannte Lösungsmitteln gelöst.

Die Verwendung, der feuchtigkeitsreaktiven Primer für den ersten Verfahrensschritt richtet sich im Wesentlichen nach dem Werkstoff des zu behandelnden modularen Bauteils. Bei Windschutzscheiben oder anderen Glasscheiben werden vorzugsweise geeignete Primer auf der Basis von Isocyanat-Gruppen und Alkoxysilangruppen enthaltenden Bindemitteln verwendet. Für lackierte metallische Substratoberflächen oder für Kunststoffoberflächen reichen häufig Primer auf der Basis von Isocyanatgruppen-haltigen Bindemitteln ohne Alkoxysilangruppen. Die Auswahl richtet sich unter anderem auch nach der chemischen Natur des später zu verwendenden Montageklebers. In der Regel werden hierfür einkomponentige feuchtigkeitshärtende Polyurethankleber verwendet, die reaktive Isocyanat-Gruppen in ihrem Bindemittelsystem aufweisen. Es können jedoch auch Montagekleber auf der Basis von silangruppenhaltigen Bindemitteln eingesetzt werden. Nachfolgend seien beispielhaft geeignete reaktive Primer der Firma Henkel Teroson GmbH genannt:
Terostat-8511 (8510), Terostat-8512, Terostat-8515, Terostat-8516, Terostat-8517, Terostat-8517 H, Terostat-8517GM-25, Terostat-8518, Terostat-8521,
Terostat-8522, Terostat-8523CS-25, Terostat-8524OT-25, Terostat-8525, Terostat-8526, Terostat-8527GM-25, Terostat-8530.

Es ist jedoch auch möglich, ähnliche Primer anderer Hersteller für das erfindungsgemäße Verfahren einzusetzen.

Die nach dem erfindungsgemäßen Verfahren vorbehandelten lagerfähigen modularen Bauteile weisen gegenüber herkömmlich behandelten Bauteilen den Vorteil auf, dass die Aktivität der zu verklebenden Oberfläche auch über drei Monate Lagerzeit hinaus noch klebeaktiv bleibt, so dass kein Adhäsionsversagen zum Klebstoff beobachtet wird. Es wird vermutet, dass durch die Umsetzung der reaktiven Gruppen des Primers an dessen Oberfläche nach der Applikation der H-aktiven Substanz auf dem vorbehandelten Substrat so verändert wird, dass sie eine wesentliche verlängerte "offene Zeit" aufweist, das heißt, dass sie über einen sehr langen Zeitraum bis zu 1 Jahr und länger eine Oberflächenbeschaffenheit aufweist, die eine verlässliche strukturelle Verklebung ohne Adhäsionsversagen zulässt. Das erfindungsgemäße Verfahren vereinfacht also die Produktionsprozesse von modularen Bauteilen indem es nachträgliches Aufbringen von Primern an der Montagelinie oder in der Werkstatt (beim Reparaturfall) unnötig macht. Dadurch wird gleichzeitig Lösungsmittelmission an der Montagelinie oder in der Werkstatt vermindert, es wird eine verlässlichere, "klebefreundliche" Oberfläche des modularen Bauteils ermöglicht, wodurch fehlerhafte Verklebungen vermieden werden. Außerdem wird die Lagerhaltung von modularen Bauteilen durch die möglich gewordene sehr viel längere Zwischenlagerung vereinfacht.

Die bevorzugten Substrate für derartige modulare Bauteile sind Glas wie für die Scheiben im Kraftfahrzeugbau oder Glasmatten verstärkte Thermoplaste (GMT) wie z.B. Glasmatten- oder Glasfaserverstärktes Polypropylen oder auch Sheet molding compounds (SMC) auf der Basis von Bindemitteln aus ungesättigten Polyestern und Styrol oder auf der Basis von Epoxybindemitteln.

Das erfindungsgemäße Verfahren kann vorzugsweise bei der Herstellung der folgenden modularen Bauteile angewendet werden: feststehende Scheiben wie Windschutzscheiben, Heckscheiben oder andere feststehende Seitenscheiben im Kraftfahrzeugbau sowie für diverse Anbauteile, die in der Endmontage bei der Fertigung von Kraftfahrzeugen an die Karosserie angeklebt werden müssen. Hierzu zählen Reserveradmulden, Abdeckungen für Lenkwellen, Dachmodule sowie diverse weitere thermoplastische Anbauteile oder auch Spiegelfüsse, die auf die Innenseite der Windschutzscheibe geklebt werden.

Bei Modulen aus GMT auf der Basis von Polyolefinen wie Polypropylen ist es zweckmäßig, die Stellen, auf die der Primer aufgetragen wird, vorher in an sich bekannter Weise durch Beflammung oder durch Plasmavorbehandlung zu aktivieren.

Der Auftrag des Primers sowie der H-aktiven Substanz auf die Bauteile kann auf die verschiedensten Weisen erfolgen, bei geringen Stückzahlen kann dies durch einen filzartigen Applikator manuell erfolgen, bei größeren Stückzahlen erfolgt der Primerauftrag und der Auftrag der H-aktiven Substanz zweckmäßigerweise durch Sprühauftrag. Der Primer wird dabei üblicherweise in dünner Schicht von etwa 5 bis 30 g/m², vorzugsweise zwischen 10 g/m² bis 20 g/m² (Naßschicht) aufgetragen gefolgt vom Auftrag der H-aktiven Substanz.

Ein weiterer Gegenstand der vorliegenden Erfindung ist ein Verfahren zum Verkleben eines gemäß mindestens einem der Ansprüche 1 bis 4 hergestellten modularen Bauteils mit einem anderen Bauteil unter Verwendung eines Montageklebers, dadurch gekennzeichnet, dass der Montagekleber entweder auf die nach Ansprüche 1 bis 4 vorbeschichtete Oberfläche des modularen Bauteils oder auf die zu verklebende Oberfläche des anderen Bauteils aufgetragen wird, anschließend die Bauteile gefügt werden, worauf der Montagekleber ausgehärtet wird unter Ausbildung einer kraftschlüssigen Verbindung zwischen dem modularen Bauteil und dem anderen Bauteil.

Die nachfolgenden Beispiele sollen die Erfindung näher erläutern. Bei Zusammensetzungen sind dabei alle Mengenangaben Gewichtsteile, wenn nicht anders angegeben.

### Beispiele

Es wurden 1 bis 6 %ige Lösungen (Gewichtsprozent) der nachstehend aufgeführten Tabelle, Modifikatoren (H-aktive Substanzen) in Ethylacetat (EthAc) bzw. Isopropanol (IPA) bzw. Isopropanol/Wassergemischen hergestellt

| Modifikator | 7 Tage | 3 Monate | 6 Monate | 12 Monate |
|---|---|---|---|---|
| ohne | 100%c | 100%c | 80%c | 20%c |
| Propandiol (EthAc, 1; 3; 6%) | 100 % c | 100 % c | 100 % c | 100 % c |
| Butandiol (IPA, 6%) | 100 % c | 100 % c | 100 % c | 100 % c |
| Diethylentriamin (EthAc, 0,5%) | 100 % c | 100 % c | 100 % c | 100 % c |
| Polyethylenimin (IPA, 2,5; 5%) | 100 % c | 100 % c | 100 % c | 100 % c |
| THMAE (IPA /Wasser, 3%) | 100%c | 100%c | 80%c | 20%c |

| | | | | |
|---|---|---|---|---|
| 100 % c = 100 % Kohäsionsbruch im Klebstoff 80 % c = 80 % Kohäsionsbruch und 20 % Adhäsionsbruch zwischen Klebstoff und Primer THMAE = Trishydroxymethylaminomethan | | | | |

Anschließend wurden Glasplatten mit dem Glasprimer Terostat 8517 H (Firma Henkel Teroson GmbH) durch Filzauftrag beschichtet, Primerauftrag etwa 16 g Primer/m² bei Naßauftrag. Nach 5 Minuten Ablüftezeit wurde durch Sprühauftrag die Modifikatorlösung auf die Primerschicht aufgebracht. Die so beschichteten Substrate wurden für 7 Tage, 3 Monate, 6 Monate und 12 Monate zwischengelagert, danach eine Raupe des Polyurethan-Klebstoffes Terostat 8690 HM (Firma Henkel Teroson GmbH) auf die Primerschicht aufgebracht und bei Normklima (23/50 nach DIN 50014) zu vollständigen Aushärtung gelagert und danach wurde die Haftung durch Einschneiden und Abziehversuche (180° Schälversuch) geprüft. Die Ergebnisse sind in der vorstehenden Tabelle aufgeführt. Hieraus ist ersichtlich, dass ohne Modifikatorbehandlung die Haftung nach mehr als 3 Monatiger Zwischenlagerung des geprimerten Substrats deutlich nachläßt. Bei Behandlung der Primerschicht mit dem erfindungsgemäßen Modifikatorlösungen blieb die Klebeaktivität der derartig vorbehandelten Primerschicht signifikant länger erhalten, deutlich erkennbar an dem erwünschten Kohäsionsbruch im Klebstoff.

Gleiche deutliche Verbesserungen der Klebeaktivitäten im Vergleich zu unmodifizierten Primeroberflächen wurden auch nach beschleunigten Alterungstests wie dem Klimawechseltest der Volkswagengruppe, P-VW 1200, bzw. dem sogenannten "Kesternichtest", nach Lagerungen zwischen einem und zwei Monaten beobachtet. Der Kesternichtest ist dabei eine Lagerung des beschichteten Substrats bei 40°C und 100% relativer Feuchtigkeit in einem geschlossenen Behältnis.

## Patentansprüche

1. Verfahren zur Herstellung eines lagerfähigen modularen Bauteils, welches für eine Montage durch Kleben mit einem anderem Bauteil unter Verwendung eines Montageklebers vorbereitet ist, wobei die zu verklebenden Oberflächenbereiche, die mit dem Montagekleber in Berührung kommen, reaktive Gruppen aufweisen, die mit dem Montagekleber eine chemische Reaktion eingehen, **gekennzeichnet durch** die folgenden wesentlichen Verfahrensschritte:
a) Auftragen einer Bindemittelzusammensetzung enthaltend reaktive Isocyanatgruppen als feuchtigkeitsreaktiven Primer auf die zu verklebenden Oberflächenbereiche des Bauteils,
b) Ablüften der aufgetragenen Primerschicht,
c) Auftragen einer H-aktiven Substanz auf der Primerschicht,
d) Ablüften und Aushärten der reaktiven Primerschicht.

2. Verfahren nach Anspruch 1, **dadurch gekennzeichnet, dass** die Ablüftezeit des Schrittes b) 5 sec. bis 8 Stunden, vorzugsweise 30 sec. bis 30 Minuten, besonders bevorzugt 30 sec. bis 5 Minuten beträgt.

3. Verfahren nach Anspruch 1, **dadurch gekennzeichnet, dass** die Ablüftezeit des Schrittes d) 2 Minuten bis 60 Minuten, vorzugsweise 5 Minuten bis 20 Minuten beträgt.

4. Verfahren nach Anspruch 1 bis 3, **dadurch gekennzeichnet, dass** als H-aktive Substanz eine Lösung von Aminen, Aminoalkoholen, Polyolen, Polymercaptanen, Polycarbonsäuren, Hydroxycarbonsäuren, Aminocarbonsäuren, Mercaptocarbonsäuren oder deren Mischungen verwendet wird.

5. Verfahren zum Verkleben eines gemäß mindestens einem der Ansprüche 1 bis 4 hergestellten modularen Bauteils mit einem anderen Bauteil unter Verwendung eines Montageklebers, **dadurch gekennzeichnet, dass** der Montagekleber entweder auf die nach Ansprüche 1 bis 4 vorbeschichtete Oberfläche des modularen Bauteils oder auf die zu verklebende Oberfläche des anderen Bauteils aufgetragen wird, anschließend die Bauteile gefügt werden, worauf der Montagekleber ausgehärtet wird unter Ausbildung einer kraftschlüssigen Verbindung zwischen dem modularen Bauteil und dem anderen Bauteil.

## Claims

1. Method of producing a storable modular component prepared for assembly by adhesive bonding with another component, using an assembly adhesive, the surface regions to be bonded that come into contact with the assembly adhesive having reactive groups which enter into a chemical reaction with the assembly adhesive, **characterized by** the following key steps:
a) applying a binder composition containing reactive isocyanate groups as a moisture-reactive primer to the surface regions of the component that are to be bonded,
b) flashing off the applied primer layer,
c) applying an H-active substance to the primer layer,
d) flashing off and curing the reactive primer layer.

2. Method according to Claim 1, **characterized in that** the flash-off time of step b) is 5 seconds to 8 hours, preferably 30 seconds to 30 minutes, more preferably 30 seconds to 5 minutes.

3. Method according to Claim 1, **characterized in that** the flash-off time of step d) is 2 minutes to 60 minutes, preferably 5 minutes to 20 minutes.

4. Method according to Claim 1 to 3, **characterized in that** the H-active substance used is a solution of amines, amino alcohols, polyols, polymercaptans, polycarboxylic acids, hydroxy carboxylic acids, amino carboxylic acids, mercapto carboxylic acids or mixtures thereof.

5. Method of adhesively bonding a modular component produced according to at least one of Claims 1 to 4 to another component, using an assembly adhesive, **characterized in that** the assembly adhesive is applied either to the surface of the modular component, precoated according to Claims 1 to 4, or to the surface that is to be bonded on the other component, after which the components are joined, whereupon the assembly adhesive is cured to form a force connection between the modular component and the other component.

## Revendications

1. Procédé pour la production d'un élément modulaire qui peut être entreposé qui est préparé pour un montage par collage avec une autre pièce avec utilisation d'une colle de montage, les zones de surface à coller qui entrent en contact avec la colle de montage présentant des groupes réactifs qui participent à une réaction chimique avec la colle de montage, **caractérisé par** les étapes de procédé essentielles suivantes :
a) application d'une composition de liant contenant des groupes isocyanate réactifs comme apprêt réactif avec l'humidité sur les zones de surface à coller de l'élément,
b) évaporation à l'air de la couche d'apprêt appliquée,
c) application d'une substance à H actif sur la couche d'apprêt,
d) évaporation à l'air et durcissement de la couche d'apprêt réactif.

2. Procédé selon la revendication 1, **caractérisé en ce que** le temps d'évaporation à l'air de l'étape b) est de 5 secondes à 8 heures, de préférence de 30 secondes à 30 minutes, de manière particulièrement préférée de 30 secondes à 5 minutes.

3. Procédé selon la revendication 1, **caractérisé en ce que** le temps d'évaporation à l'air de l'étape d) est de 2 minutes à 60 minutes, de préférence de 5 minutes à 20 minutes.

4. Procédé selon la revendication 1 à 3, **caractérisé en ce qu'**on utilise comme substance à H actif une solution d'amines, d'aminoalcools, de polyols, de polymercaptans, de poly(acides carboxyliques), d'acides hydroxycarboxyliques, d'acides aminocarboxyliques, d'acides mercaptocarboxyliques ou leurs mélanges.

5. Procédé pour le collage d'un élément modulaire préparé selon au moins l'une quelconque des revendications 1 à 4 avec un autre élément en utilisant une colle de montage, **caractérisé en ce que** la colle de montage est appliquée sur la surface prérevêtue selon les revendications 1 à 4 de l'élément modulaire ou sur la surface à coller d'un autre élément, puis les éléments sont assemblés, la colle de montage étant ensuite durcie avec formation d'un assemblage mécanique entre la pièce modulaire et l'autre pièce.
